# EUROPEAN PATENT SPECIFICATION

(11) **EP 2 186 327 B1**
(45) Date of publication and mention of the grant of the patent: **16.08.2017**
(21) Application number: 07825737.5
(22) Date of filing: 06.09.2007
(51) Int. Cl.: H04N 21/472, H04N 21/482

(54) **USER INTERFACE FOR RECORDING PROGRAM, APPARATUS AND METHOD FOR DISPLAYING IMAGE**
BENUTZERSCHNITTSTELLE FÜR EIN AUFZEICHNUNGSPROGRAMM SOWIE VORRICHTUNG UND VERFAHREN ZUR BILDANZEIGE
INTERFACE UTILISATEUR POUR PROGRAMME D'ENREGISTREMENT, APPAREIL ET PROCÉDÉ POUR AFFICHER UNE IMAGE

(43) Date of publication of application: 19.05.2010
(73) Proprietor: LG Electronics Inc., Seoul 150-010 (KR)
(72) Inventor: PAIK, Seung, Woo LG ELECTRONICS INC. IP GROUP, Gyoungsangbuk-do 730-727 (KR)
(74) Representative: Cabinet Plasseraud
(86) International application number: PCT/IB2007/003638
(87) International publication number: WO 2008/029289

(56) References cited:
- EP-A2- 0 836 320
- EP-A2- 1 193 968
- EP-A2- 1 324 600
- EP-A2- 1 758 385
- JP-A- 11 308 539
- JP-A- 2004 336 687
- KR-A- 20010 018 974
- KR-A- 20010 069 122
- KR-A- 20040 041 184

## Description

### [Technical Field]

The present disclosure relates to an image display apparatus, and more particularly, to an apparatus and a method for displaying a more convenient menu screen when a user sets reservation recording.

### [Background Art]

Generally, a digital television (TV) includes a large capacity storage device such as a hard disk drive (HDD) to provide a basis of storing broadcasting signals (audio/video data) in the form of digital signals, and reproducing and viewing the stored digital signals if necessary. This function can be used for storing a favorite broadcasting program.

That is, development of a personal video recorder (PVR) allows storing high definition (HD) digital broadcasting of high quality in an HDD, and reproducing and viewing anytime when a user desires to view the broadcasting. Besides, a variety of functions such as reservation recording, time shift, instant reproduction, trick play are added to provide a technological basis on which more convenient and useful functions can be accessed.

Particularly, the reservation recording function allows a user to input broadcasting, a channel, and date using an electronic program guide (EPG), which is a guide information screen regarding broadcasting programs, to select a desired program and set reservation recording to it.

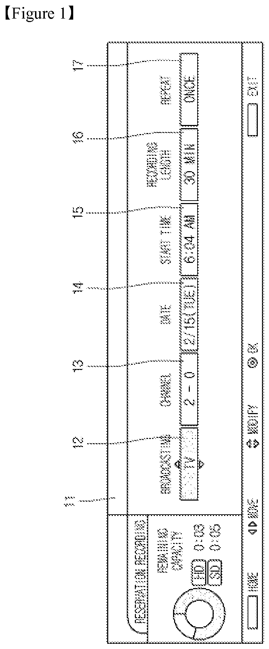

However, in case of making reservation recording using a related art digital TV, there has been inconvenience more or less. Description will be made with reference to Fig. 1. Fig. 1 illustrates a reservation recording menu viewed to a user in a related art image display apparatus. The reservation recording menu is displayed in the form of on-screen-display (OSD) 11.

The user can set broadcasting 12, a channel 13, a date 14, a start time 15, a recording length 16, and repeat 17 using a menu displayed on the OSD 11 to register reservation recording.

According to the above-descried method, there is inconvenience that the user should directly obtain information such as time regarding a program to be recorded through an EPG information screen, and input the obtained information to a reservation recording menu. That is, to make a reservation recording, the user should search for EPG information in advance to obtain information regarding a specific program, and should execute the reservation recording menu to register the reservation recording through the reservation recording menu.

Consequently, the user consumes much time when setting the reservation recording, and should be aware of information such as a channel or a start time of a program the user desires to record.

EP1758385 A2 relates to a broadcast receiver and a method for managing reserved recording information.

### [Disclosure]

### [Technical Problem]

Embodiments provide an interface that allows a user to more conveniently make a reservation recording.

Embodiments also an apparatus and a method that read information of a program to display the read information on an interface when a user inputs reservation recording conditions using the interface so that the user can make a reservation recording more in a faster and more accurate manner.

### [Technical Solution]

In one embodiment, an image display apparatus is provided according to claim 1.

In another embodiment, a method for displaying an image is provided according to claim 6.

### [Advantageous Effects]

According to proposed embodiments, a user can conveniently obtain broadcasting program information corresponding to search conditions, and thus can perform a reservation recording more accurately.

### [Description of Drawings]

Fig. 1 is a view illustrating a reservation recording menu screen shown to a user in a related art image display apparatus.
Fig. 2 is a block diagram illustrating the construction of an image display apparatus according to an embodiment.
Figs. 3 and 4 are flowcharts explaining a method for displaying an image according to an embodiment.
Figs. 5 to 8 are exemplary views of a user interface for a program recording according to an embodiment.

### [Mode for Invention]

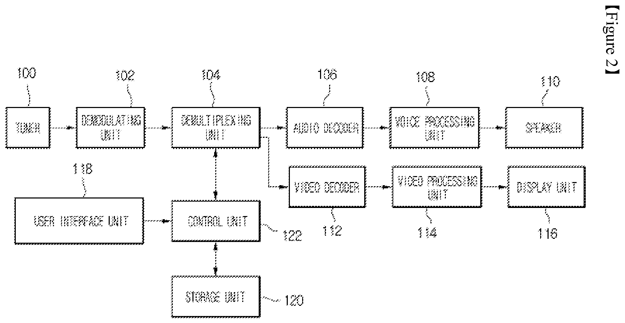

Fig. 2 is a block diagram illustrating the construction of an image display apparatus according to an embodiment.

Referring to Fig. 2, the image display apparatus includes a tuner 100 for receiving broadcasting signals containing EPG information from an outside to select broadcasting signals of a channel desired by a user, a demodulating unit 102 for demodulating the broadcasting signals selected by the tuner 100 to correct errors and converting the broadcasting signals into transport streams, a demultiplexing unit 104 for demultiplexing multiplexed transport streams input through the demodulating unit 102 to separate the transport streams into image streams, voice streams, and additional information streams, an audio decoder 106 for decoding the voice streams separated by the demultiplexing unit 104, a voice processing unit 108 for processing voice streams decoded by the audio decoder 106 such that the voice streams can be output, and a speaker 110 for outputting the voice streams processed by the voice processing unit 108.

Also, the image display apparatus includes a video decoder 112 for decoding the image streams separated by the demultiplexing unit 104, an image processing unit 114 for processing the image streams decoded by the video decoder 112 such that the image streams can be output, a display unit 116 for displaying the image streams processed by the image processing unit 114 and a reservation recording menu screen provided to the user, and a user interface unit 118 for providing a user interface for a reservation recording using program information extracted from EPG information.

Also, the image display apparatus includes a storage unit 120 for storing EPG information separated by the demultiplexing unit 104 and broadcasting signals selected by the user, and a control unit 122 for extracting EPG information corresponding to reservation recording conditions set through the user interface unit 118 from the storage unit 120 to control reservation recording setting to be performed according to the EPG information.

In detail, the controller 122 allows the reservation recording menu screen to be provided and information regarding a program corresponding to conditions input by the user to be displayed using the user interface unit 118 and the image processing unit 114.

Particularly, the control unit 122 allows information regarding a program corresponding to search conditions input by the user to be aligned through the user interface 118. The search conditions for the program input by the user includes a channel, a time, and genre.

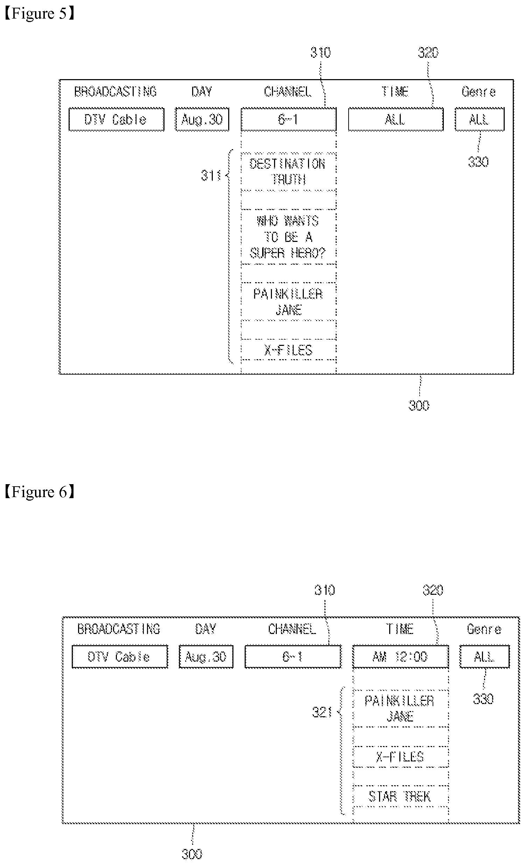

Also, the control unit 122 can list information of the program corresponding to the search conditions in various ways, the embodiments of which will be described with reference to Figs. 5 to 8.

Meanwhile, the operation of the image display apparatus according to an embodiment will be described below.

First, when power of the image display apparatus is turned on, the control unit 122 outputs a control signal to allow a broadcasting program of a channel selected by the user to be selected from broadcasting signals received via the tuner 100.

The tuner 100 selects the channel selected by the user from received broadcasting signals, and the demodulating unit 102 demodulates the broadcasting signals received via the tuner 100 to correct errors, and converts the broadcasting signals into transport streams.

Broadcasting data that have been converted into the transport streams are separated into audio streams, video streams, additional information streams by the demultiplexing unit 104.

The audio streams separated by the demultiplexing unit 104 are decoded and processed so that the audio streams can be output by the audio decoder 106 and the voice processing unit 108, and then output through the speaker 110. Also, the video streams separated by the demultiplexing unit 104 are decoded and processed so that the video streams can be displayed by the video decoder 112 and the image processing unit 114, and then displayed through the display unit 116.

Also, the additional information streams separated by the demultiplexing unit 104 are stored in the storage unit 120 in response to a control signal of the control unit 122.

Also, when a reservation recording command is input through the user interface unit 118, the control unit 122 allows the reservation recording setting menu screen to be displayed using the display unit 116.

Next, the user can input reservation recording conditions through a reservation recording setting menu screen displayed by the display unit 116. Contents of the reservation recording setting can be obtained from EPG information stored inside the apparatus. The EPG information includes a channel, a broadcasting time, and a genre as program information.

That is, since the EPG information includes broadcasting station information, a channel, a genre, and a broadcasting time of a program, the control unit 122 allows conditions desired by the user to be set from information included in the EPG information, and allows EPG information corresponding to the conditions set by the user to be extracted and information of a corresponding program to be displayed.

Particularly, in the case where the user inputs conditions regarding a channel and a broadcasting time to check information of a corresponding program, the control unit 122 lists and displays information of programs broadcasted through the channel when the conditions of the channel is input. Next, the control unit 122 allows only information of the listed information of the programs that corresponds to the input broadcasting time to be listed.

Through the above process, the user can gradually limit desired search conditions, and information of programs corresponding to the search conditions can gradually reduce.

Though description will be primarily made for channel information, time information, and genre information of a broadcasting program as search conditions for reservation recording in an embodiment, the search conditions are not limited thereto.

The user sets a desired condition from a channel, a time, and a genre on the menu screen displayed through the display unit 116. Then, the control unit 122 searches for and extract stored EPG information to read a program corresponding to the condition set by the user.

For example, when the user sets a channel as the reservation recording condition, the control unit 122 allows all EPG information of the channel set by the user to be extracted and displayed on the menu screen.

When the user sets a time as the reservation recording condition, the control unit 122 allows all EPG information of programs having the same time band as the time band set by the user to be extracted and displayed on the menu screen. When the user sets a genre such as action, drama, and science fiction (SF), the control unit 122 allows all EPG information of programs corresponding to the set genre to be extracted and displayed.

Also, the user can set two or more conditions simultaneously as the reservation recording conditions. In this case, programs corresponding to the set conditions are extracted from EPG information and displayed.

Therefore, the user can input a specific setting condition while viewing the reservation recording menu screen. In this case, when the set condition is input, information of corresponding programs are displayed on the menu screen, so that the user can make a reservation recording of a desired program conveniently.

Also, when the user selects a specific program from information of programs listed as a result of search conditions, the control unit 122 allows a menu for setting a recording format of a program selected by the user to be displayed.

The recording format includes one of a recording length and the frequency of repetition of a program to which a reservation recording has been set by the user. The recording length represents a recording time of a program selected by the user. The frequency of repetition represents a frequency of repeated recordings of a selected program.

Also, when the user finishes setting a recording format and inputs to perform a reservation recording according to the set condition, the control unit 122 stores contents of reservation recording set by the user in the storage unit 120, and records a corresponding program broadcasted at a corresponding time to store the program in the storage unit 120.

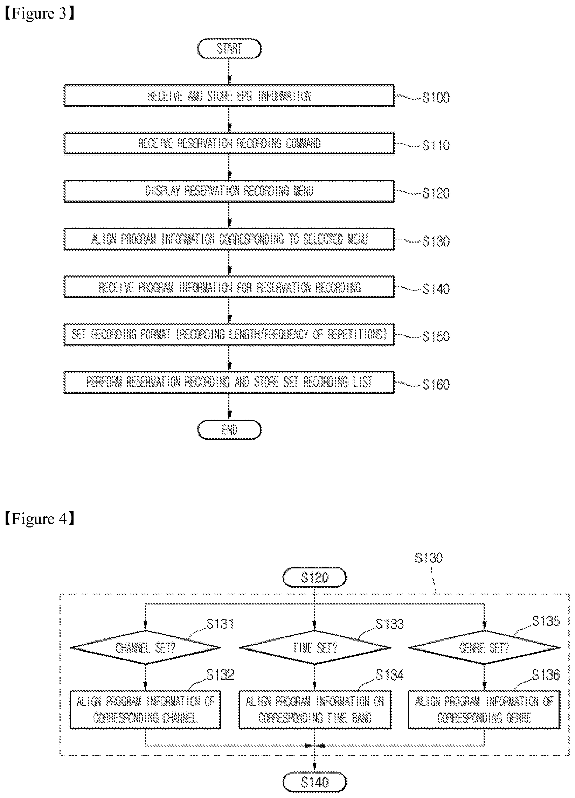

Figs. 3 and 4 are flowcharts explaining a method for displaying an image according to an embodiment.

First, the image display apparatus according to the embodiment receives broadcasting signals containing EPG information, and stores the broadcasting signals (S100).

Also, when the user requests the reservation recording menu screen, the image display apparatus receives the reservation recording command (S110) to display the reservation recording menu screen on the display unit (S120).

The user views the displayed menu screen to set a desired reservation recording condition, and the control unit 122 allows information of a program corresponding to the selected recording condition to be extracted and aligned on the menu screen (S130). Here, the user can input one or more search conditions as the reservation recording setting condition, and corresponding programs are aligned.

Also, when the user selects a specific program, the control unit 122 receives information of the selected program (S140), and subsequently, the user sets a recording format of the selected program (S150). That is, the user sets a recording length or the frequency of repetitions of the selected program.

After a series of setting processes for a reservation recording is performed, the control unit 122 stores the set reservation recording condition and records a program according to the set reservation recording condition (S160).

Meanwhile, a process of inputting a reservation recording condition desired by the user and extracting and aligning EPG information corresponding to the input recording condition in the operation S130 is illustrated in detail in Fig. 4.

In detail, in the case where the reservation recording condition set through the menu screen by the user is about a channel (S 131), the control unit 122 extracts and aligns information of broadcasting programs broadcasted through the channel from the stored EPG information (S132).

In the case where the reservation recording condition set through the menu screen by the user is about a time (S133), the control unit 122 extracts and aligns information of all broadcasting programs broadcasted at the time from the stored EPG information (S134).

Meanwhile, in the case where the reservation recording condition set through the menu screen by the user is about a genre (S135), the control unit 122 extracts and aligns information of all broadcasting programs broadcasted through the genre from the stored EPG information (S136).

Hereinafter, the user interface shown to the user as the reservation recording setting screen will be described. Particularly, information of a program aligned according to a condition set through the menu screen by the user will be described.

Figs. 5 to 8 exemplarily illustrates a user interface for a program recording according to an embodiment.

First, respective user interfaces 300 are menu screens displayed so that the user can set a reservation recording. In the menu screens, a channel, a time, and a genre are classified and aligned as set items on the menu screens. The menu screens are formed in a bar shape, so that respective set conditions are listed in one direction.

First, Fig. 5 illustrates the user sets a channel through the menu screen. When the user selects a specific channel (for example, 6-1) through a channel cell 310, information 311 of programs broadcasted through the channel is extracted from EPG information and aligned below the channel cell 310.

In this case, a DVT cable is selected as broadcasting and day is set to Aug. 30 on the menu screen for example.

Next, Fig. 6 illustrates the user further inputs time information through the menu screen of the provided user interface 300.

That is, after the user selects a specific channel using the channel cell 310 as illustrated in Fig. 5, when the user inputs a specific time band (for example, AM 12:00) using a time cell 320 to limit aligned information of the program, information 321 of programs broadcasted on the time band in the channel is extracted and aligned as illustrated in Fig. 6.

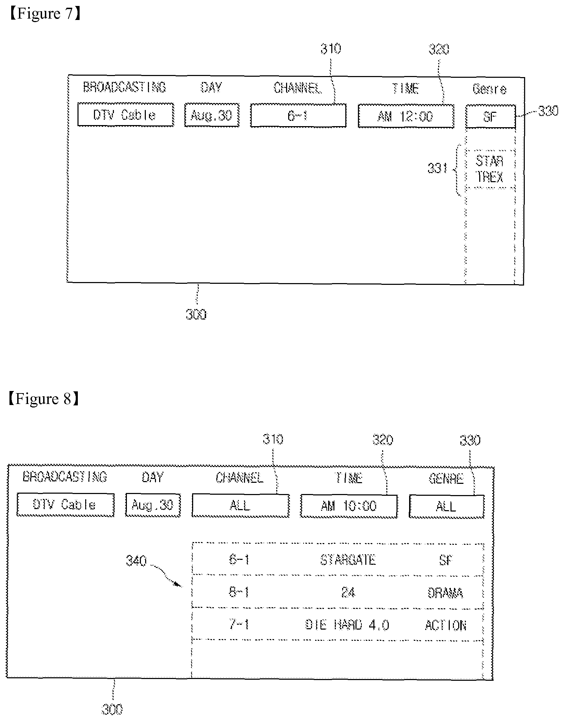

Also, Fig. 7 illustrates the user inputs a genre as a reservation recording condition. In this case, the user can select an SF genre using a genre cell 330 for example.

In this case, information 331 of a broadcasting program corresponding to all conditions input by the user is displayed on a region below the genre cell 330.

Through the above process, the user can check programs corresponding to a desired genre from programs broadcasted on a desired time band through a desired channel at a glance.

Figs. 5 to 7 illustrate extracted information of broadcasting programs is aligned below the cell region corresponding to an input set condition on the user interface 300. This is a mere embodiment, and an aligning method of programs corresponding to a search condition can be modified in various ways.

That is, information of searched (extracted) programs can be listed on an upper region inside the user interface 300, or the information of the searched programs can be listed on a lower region inside the user interface 300.

The above-described embodiment can be described below in other aspect.

The control unit 122 stores a setting order of reservation recording conditions input through the user interface by the use, and aligns information of broadcasting programs output from the display unit according to the stored setting order.

Fig. 8 is a view illustrating another example of a user interface according to an embodiment.

Fig. 8 illustrates a user inputs a specific time band using the time cell 320 to make a reservation recording. In this case, the control unit 122 extracts information of programs on the time band from EPG information, and then allows a broadcasting channel and a genre of the programs to be displayed together with a program title (340).

Through the above process, even in case of inputting only information of a specific time band, the user can check the genre of programs broadcasted on the time band, and the channel of the programs at a glance.

In the embodiment of Fig. 8, when the user selects a broadcasting channel or a genre as a setting condition of a reservation recording besides the time band, programs corresponding to all selected conditions are aligned.

The user can more easily search for a program through the user interface for a reservation recording described by the above embodiments when making a reservation recording, so that an accurate reservation recording can be performed.

### [Industrial Applicability]

The embodiments relate to an image display apparatus, and more particularly, to an image display apparatus that allows a user to more conveniently and accurately make a reservation recording, so that it has industrial applicability.

## Claims

1. An image display apparatus comprising:
a tuner (100) for receiving broadcasting signals containing electronic program guide information;
a storage unit (120) for storing the electronic program guide information received through the tuner;
a display unit (116) for displaying the broadcasting signals and the electronic program guide information;
a user interface unit (118) for receiving reservation recording conditions input by a user; and
a control unit (122) allowing a reservation recording menu screen to be displayed through the display unit, and reading a recording setting condition received through the user interface unit to allow a reservation recording to be set and a reservation recording to be performed,
**characterized in that**
the control unit is configured to store a setting order of the reservation recording conditions input by the user, and to align a list of broadcasting programs output through the display unit according to the setting order.

2. The apparatus according to claim 1, wherein the reservation recording conditions comprise at least one of a broadcasting time, a channel, and a genre among information extracted from the electronic program guide information.

3. The apparatus according to claim 1, wherein the control unit is configured to extract broadcasting programs corresponding to all of the reservation recording conditions input by the user to display the same on the menu screen.

4. The apparatus according to claim 1, wherein the control unit is configured to display the reservation recording menu screen in a bar shape, and to align information of broadcasting programs corresponding to the reservation recording conditions in a region below a cell of a setting condition on the menu screen.

5. The apparatus according to claim 1, wherein the storage unit further stores a list of reservation recordings set by the user.

6. A method for displaying an image, the method comprising:
receiving (S100) a broadcasting program and electronic program guide information, and storing the received electronic program guide;
when a user command for performing a reservation recording of the broadcasting program is input, displaying (S120) a reservation recording setting menu screen using a display unit;
reading reservation recording conditions input through the menu screen, and extracting broadcasting programs corresponding to the reservation recording conditions from the electronic program guide information; and
aligning (S130) information of the extracted broadcasting programs on the menu screen, the information aligned on the menu screen being broadcasting program information corresponding to all of the set reservation recording conditions,
**characterized in that**
the information of the broadcasting programs is aligned according to a setting order of the reservation recording conditions input through the menu screen.

7. The method according to claim 6, wherein the aligning of the information of the extracted broadcasting programs is consistently performed whenever the reservation recording conditions are input.

8. The method according to claim 6, wherein the reservation recording conditions are information extracted from the electronic program guide information, and comprise at least one of a broadcasting time, a channel, and a genre of the broadcasting program.

9. The apparatus according to claim 1, wherein the reservation recording menu screen comprises a cell region for setting a broadcasting time and a channel of a broadcasting program as broadcasting program information extractable from electronic program guide information, and the extracted broadcasting program information is aligned on one side of the cell region when the broadcasting time and the channel of the broadcasting program are input using the cell region.

10. The apparatus according to claim 9, wherein the cell region comprises a time region and a channel region of a broadcasting program, for setting a reservation recording, and the extracted broadcasting program information is aligned below one of the time region and the channel region.

11. The apparatus according to claim 9, wherein a genre region regarding a genre of a broadcasting program extractable from the electronic program guide information is further formed together with a time region and a channel region.

12. The apparatus according to claim 9, wherein a plurality of cell regions provided for setting the reservation recording are linearly arranged in a predetermined direction.

## Patentansprüche

1. Bilddarstellungsvorrichtung mit:
einem Tuner (100) zum Empfangen von Rundfunksignalen, die elektronische Programmführungsinformation enthalten;
einer Speichereinheit (120) zum Speichern der über den Tuner empfangenen elektronischen Programmführungsinformation;
einer Displayeinheit (116) zum Darstellen der Rundfunksignale und der elektronischen Programmführungsinformation;
einer Benutzerschnittstelleneinheit (118) zum Empfangen von durch einen Benutzer eingegebenen Bedingungen für eine programmierte Aufzeichnung; und
einer Steuereinheit (122), die es ermöglicht, einen Menübildschirm für eine programmierte Aufzeichnung durch die Displayeinheit darzustellen und eine über die Benutzerschnittstelleneinheit empfangene Aufzeichnungssetzbedingung zu lesen, um zu ermöglichen, eine programmierte Aufzeichnung zu setzen und eine programmierte Aufzeichnung auszuführen;
**dadurch gekennzeichnet, dass**
die Steuereinheit dafür konfiguriert ist, eine Setzfolge der durch den Benutzer eingegebenen Bedingungen für eine programmierte Aufzeichnung zu speichern und eine Liste von durch die Displayeinheit ausgegebenen Rundfunkprogrammen gemäß der Setzfolge auszurichten.

2. Vorrichtung nach Anspruch 1, wobei die Bedingungen für eine programmierte Aufzeichnung mindestens eine Information unter einer Sendezeit, einem Kanal und einem Genre aufweisen, die von der elektronischen Programmführungsinformation extrahiert wird.

3. Vorrichtung nach Anspruch 1, wobei die Steuereinheit dafür konfiguriert ist, Rundfunkprogramme zu extrahieren, die allen durch den Benutzer eingegebenen Bedingungen für eine programmierte Aufzeichnung entsprechen, um diese auf dem Menübildschirm darzustellen.

4. Vorrichtung nach Anspruch 1, wobei die Steuereinheit dafür konfiguriert ist, den Menübildschirm für eine programmierte Aufzeichnung in einer Balkenform darzustellen und Information von Rundfunkprogrammen, die den Bedingungen für eine programmierte Aufzeichnung in einem Bereich entsprechen, unter einer Zelle einer Setzbedingung auf dem Menübildschirm darzustellen.

5. Vorrichtung nach Anspruch 1, wobei die Speichereinheit ferner eine Liste von durch den Benutzer gesetzten programmierten Aufzeichnungen speichert.

6. Verfahren zum Darstellen eines Bildes, wobei das Verfahren die Schritte aufweist:
Empfangen (S100) eines Rundfunkprogramms und elektronischer Programmführungsinformation und Speichern der empfangenen elektronischen Programmführung;
Darstellen (S120) eines Menübildschirms für eine programmierte Aufzeichnung unter Verwendung einer Displayeinheit, wenn ein Benutzerbefehl zum Ausführen einer programmierten Aufzeichnung des Rundfunkprogramms eingegeben wird;
Lesen von über den Menübildschirm eingegebenen Bedingungen für eine programmierte Aufzeichnung und Extrahieren von den Bedingungen für eine programmierte Aufzeichnung entsprechenden Rundfunkprogrammen von der elektronischen Programmführungsinformation; und
Ausrichten (S130) von Information der extrahierten Rundfunkprogramme auf dem Menübildschirm, wobei die auf dem Menübildschirm ausgerichtete Information Rundfunkprogramminformation ist, die allen gesetzten Bedingungen für eine programmierte Aufzeichnung entspricht;
**dadurch gekennzeichnet, dass**
die Information der Rundfunkprogramme gemäß einer Setzfolge der über den Menübildschirm eingegebenen Bedingungen für eine programmierte Aufzeichnung ausgerichtet wird.

7. Verfahren nach Anspruch 6, wobei das Ausrichten der Information der extrahierten Rundfunkprogramme immer dann konsistent ausgeführt wird, wenn die Bedingungen für eine programmierte Aufzeichnung eingegeben werden.

8. Verfahren nach Anspruch 6, wobei die Bedingungen für eine programmierte Aufzeichnung Information sind, die von der elektronischen Programmführungsinformation extrahiert wird, und mindestens eine Information unter einer Sendezeit, einem Kanal und einem Genre des Rundfunkprogramms aufweisen.

9. Vorrichtung nach Anspruch 1, wobei der Menübildschirm für eine programmierte Aufzeichnung einen Zellenbereich zum Setzen einer Sendezeit und eines Kanals eines Rundfunkprogramms als Rundfunkprogramminformation aufweist, die von der elektronischen Programmführung extrahierbar ist, und wobei die extrahierte Rundfunkprogramminformation auf einer Seite des Zellenbereichs ausgerichtet wird, wenn die Sendezeit und der Kanal des Rundfunkprogramms unter Verwendung des Zellenbereichs eingegeben werden.

10. Vorrichtung nach Anspruch 9, wobei der Zellenbereich einen Zeitbereich und einen Kanalbereich eines Rundfunkprogramms zum Setzen einer programmierten Aufzeichnung aufweist, und wobei die extrahierte Rundfunkprogramminformation unter dem Zeitbereich oder dem Kanalbereich ausgerichtet wird.

11. Vorrichtung nach Anspruch 9, wobei ferner ein Genrebereich bezüglich eines Genres eines von der elektronischen Programmführungsinformation extrahierbaren Rundfunkprogramms zusammen mit einem Zeitbereich und einem Kanalbereich gebildet wird.

12. Vorrichtung nach Anspruch 9,
wobei mehrere Zellenbereiche, die zum Setzen der programmierten Aufzeichnung bereitgestellt werden, in einer vorgegebenen Richtung linear angeordnet sind.

## Revendications

1. Appareil pour afficher une image comprenant :
un syntoniseur (100) pour recevoir des signaux de télédiffusion contenant des informations de guide de programme électronique ;
une unité de stockage (120) pour stocker les informations de guide de programme électronique reçues par le biais du syntoniseur ;
une unité d'affichage (116) pour afficher les signaux de télédiffusion et les informations de guide de programme électronique ;
une unité d'interface utilisateur (118) pour recevoir des conditions d'enregistrement de réservation entrées par un utilisateur ; et
une unité de commande (122) autorisant l'affichage d'un écran de menu d'enregistrement de réservation par le biais de l'unité d'affichage, et lisant une condition de définition d'enregistrement reçue par le biais de l'unité d'interface utilisateur pour autoriser la définition d'un enregistrement de réservation et la réalisation d'un enregistrement de réservation,
**caractérisé en ce que**
l'unité de commande est configurée pour stocker un ordre de définition des conditions d'enregistrement de réservation entrées par l'utilisateur, et pour aligner une liste de programmes de télédiffusion délivrée par le biais de l'unité d'affichage selon l'ordre de définition.

2. Appareil selon la revendication 1, dans lequel les conditions d'enregistrement de réservation comprennent au moins l'un parmi une heure de télédiffusion, une chaîne et un genre parmi des informations extraites des informations de guide de programme électronique.

3. Appareil selon la revendication 1, dans lequel l'unité de commande est configurée pour extraire des programmes de télédiffusion correspondant à toutes les conditions d'enregistrement de réservation entrées par l'utilisateur pour les afficher sur l'écran de menu.

4. Appareil selon la revendication 1, dans lequel l'unité de commande est configurée pour afficher l'écran de menu d'enregistrement de réservation sous une forme de barre et pour aligner des informations de programmes de télédiffusion correspondant aux conditions d'enregistrement de réservation dans une zone en dessous d'une cellule d'une condition de définition sur l'écran de menu.

5. Appareil selon la revendication 1, dans lequel l'unité de stockage stocke en outre une liste d'enregistrements de réservation définis par l'utilisateur.

6. Procédé pour afficher une image, le procédé comprenant :
la réception (S100) d'un programme de télédiffusion et d'informations de guide de programme électronique, et le stockage du guide de programme électronique reçu ;
lorsqu'une commande d'utilisateur pour réaliser un enregistrement de réservation du programme de télédiffusion est entrée, l'affichage (S120) d'un écran de menu définissant un enregistrement de réservation à l'aide d'une unité d'affichage ;
la lecture de conditions d'enregistrement de réservation entrées par le biais de l'écran de menu et l'extraction de programmes de télédiffusion correspondant aux conditions d'enregistrement de réservation à partir des informations de guide de programme électronique ; et
l'alignement (S130) des informations des programmes de télédiffusion extraits sur l'écran de menu, les informations alignées sur l'écran de menu étant des informations de programme de télédiffusion correspondant à toutes les conditions d'enregistrement de réservation définies,
**caractérisé en ce que**
les informations des programmes de télédiffusion sont alignées selon un ordre de définition des conditions d'enregistrement de réservation entrées par le biais de l'écran de menu.

7. Procédé selon la revendication 6, dans lequel l'alignement des informations des programmes de télédiffusion extraits est réalisé de manière cohérente à chaque fois que les conditions d'enregistrement de réservation sont entrées.

8. Procédé selon la revendication 6, dans lequel les conditions d'enregistrement de réservation sont des informations extraites à partir des informations de guide de programme électronique, et comprennent au moins l'un parmi une heure de télédiffusion, une chaîne, et un genre du programme de télédiffusion.

9. Appareil selon la revendication 1, dans lequel l'écran de menu d'enregistrement de réservation comprend une zone de cellule pour définir une heure de télédiffusion et une chaîne d'un programme de télédiffusion en tant qu'informations de programme de télédiffusion pouvant être extraites à partir des informations de guide de programme électronique, et les informations de programme de télédiffusion extraites sont alignées sur un côté de la zone de cellule lorsque l'heure de télédiffusion et la chaîne du programme de télédiffusion sont entrées à l'aide de la zone de cellule.

10. Appareil selon la revendication 9, dans lequel la zone de cellule comprend une zone pour l'heure et une zone pour la chaîne d'un programme de télédiffusion, pour définir un enregistrement de réservation, et les informations de programme de télédiffusion extraites sont alignées en dessous d'une zone parmi la zone pour l'heure et la zone pour la chaîne.

11. Appareil selon la revendication 9, dans lequel une zone pour le genre concernant un genre d'un programme de télédiffusion pouvant être extrait des informations de guide de programme électronique est en outre formée conjointement avec une zone pour l'heure et une zone pour la chaîne.

12. Appareil selon la revendication 9, dans lequel une pluralité de zones de cellule fournies pour définir l'enregistrement de réservation sont disposées linéairement dans une direction prédéterminée.
